# EUROPÄISCHE PATENTSCHRIFT

(11) **EP 2 524 860 B1**
(45) Veröffentlichungstag und Bekanntmachung des Hinweises auf die Patenterteilung: **11.06.2014**
(21) Anmeldenummer: 11004089.6
(22) Anmeldetag: 18.05.2011
(51) Int. Cl.: B62D 63/06

(54) **Klappbarer Anhänger**
Fold-down trailer
Remorque pliante

(43) Veröffentlichungstag der Anmeldung: 21.11.2012
(73) Patentinhaber: Wenner, Stefan, 72186 Empfingen (DE)
(72) Erfinder: Wenner, Stefan, 72186 Empfingen (DE)

(56) Entgegenhaltungen:
- EP-A1- 2 246 242
- DE-A1- 3 200 792
- NL-C2- 1 030 534
- US-A1- 2007 126 209

## Beschreibung

Die Erfindung betrifft einen Transportanhänger für Kraftfahrzeuge, mit einer Ladefläche, Zugholmen und einer Gummifederachse, welcher zu Einlagerungszwecken zusammenklappbar ist.

Transportanhänger für PKW sind sowohl im privaten als auch gewerblichen Bereich zu finden. Als einachsige Anhänger im unteren Gewichtsbereich sind sie in der Regel mit einer ungebremsten Laufachse ausgestattet und haben eine Ladefläche. Es gibt sie als Tieflader mit der Ladefläche zwischen den Rädern und als Hochlader mit einer Ladefläche über den Rädern.

Mit einer Gummifederachse ist im Sinne der Erfindung ein Achselement einschließlich Aufhängung für das rechte und linke Rad sowie Federung und Dämpfung gemeint. Dies kann z.B. außer einer Gummifederachse auch eine Torsionsfederachse sein, aber auch ein System mit Druckfedern oder Gummipuffern oder das Achselement besteht aus einzelnen Laufstummeln. Mit der Achse oder Gummifederachse ist also damit nicht direkt die Drehachse der Räder gemeint. Die Gummifederachse kann sowohl gebremst als auch ungebremst sein.

Mit der Ladefläche ist im Sinne der Erfindung jegliche Art der Nutz-Oberseite gemeint. Dies kann eine geschlossene Fläche z.B. für den Motorradtransport sein, ein allgemeiner Transportanhänger mit geschlossener Fläche und einem Kastenaufbau mit Bordwänden, und auch ein offener Rahmenaufbau mit einer oder mehreren Auffahrschienen zum Transport von Motorrädern. Bei einem Kastenaufbau können die Bordwände aus Aluminium, Stahlblech oder Holz bestehen.

Mit Zugholmen ist im Sinne der Erfindung jegliche Art der Verbindung nach vorne zur Zugkugelkupplung gemeint, was sowohl zwei oder mehrere Zugholme (auch V-Deichsel genannt), als auch eine mittige Deichsel bedeuten kann.

Speziell im privaten Umfeld ist ein entscheidendes Problem der Platzbedarf, wenn ein Anhänger nicht im Einsatz ist. Einachsige PKW-Anhänger benötigen zu Lagerung eine große Fläche oder sie können hochkant auf die Hecklappe gestellt werden, wobei aber die fest montierte Achse und die Reifen deutlich hervorstehen und die Bordwände meist nicht klappbar sind. Einschiebbare, abnehmbare oder klappbare Deichseln bzw. Zugholme führen hierbei schon zu einer Platzersparnis bzw. einer Höhenreduzierung im senkrecht aufgestellten Zustand.

### Andere Lösungen:

Es gibt Lösungen für zusammenklappbare Anhänger, die mit viel Aufwand zerlegt werden müssen oder bei denen zumindest kritische Komponenten wie z.B. die Achse demontiert werden müssen. Andere Versionen beruhen auf dem Prinzip, daß das rechte und linke Rad in Ihrer Orientierung bleiben, aber in der Spurweite parallelogrammartig aneinandergeklappt werden. Manche Umbauarten erfordern ein Anheben oder Kippen des Anhängers um an die Achse zu gelangen (z.B. "Stow-n-Tow" aus USA). Bei dem Modell "Duuo" wird der Außenrahmen des Kastenaufbaus von der Ladefläche getrennt, und die Ladefläche wird zusammen mit der Achse in den Rahmen hineingefahren.

Speziell die Anmeldungen GB 2466285A, FR 2883250-B1 und CA 2631836 A1 beruhen auf einem Umklappen der Achse um eine Drehachse parallel zur Radachse. Dieses endet in einer ca. 180 Grad gedrehten Orientierung der Achse. Dieses Umklappen wird ermöglicht, indem auch die Deichsel und die Achse drehbar miteinander verbunden sind, und für das Umklappen der Achse ist ein Aufrichten des Anhängers vorab notwendig oder es erfordert erheblichen Kraftaufwand mit z.B. hydraulischer Unterstützung. Desweiteren müssen bei den o.g. Erfindungen die Kotflügel noch in einem zusätzlichen Arbeitsschritt demontiert werden oder sie bleiben in Originalpo sition und tragen damit nicht zur Platzeinsparung bei.

Die gattungsgemäße Anmeldung EP 2246242A1 zeigt die halbkreisförmige Schwenkbewegung, bei der die Ladeflächenvorderkante die Zugholme entlanggleitet, während die Hinterkante ca. eine halbkreisförmige Bewegung beschreibt.

Die gattungsgemäße Anmeldung DE 3200792 macht die Ladefläche entweder linear oder schwenkbar bewegbar, hat dabei aber die Gummifederachse nicht starr mit der Deichsel verbunden, sondern über ein Gelenk.

Anmeldung US 2007/0126209 hat zusätzlich zur schwenkbaren Achseinheit (welche allerdings nicht starr mit der Deichsel verbunden ist) noch einen Kastenaufbau mit Deckeklappen.

Die gattungsgemäße Anmeldung NL 1030534 hat die Ladefläche längs verschiebbar und auch am hinteren Ende abkippbar. Die Verschiebung ist nur sehr bedingt geführt. Während der Bewegung kann sich die Ladefläche verkanten oder abheben. Die Arretierung rastet nicht am Ende der Bewegung automatisch ein.

Anhänger bei denen die Achse bezogen auf das Chassis verschiebbar ist, findet man z.B. bei Bootstrailem, LKW-Aufliegern oder in der Landwirtschaft. Dies dient in erster Linie dazu die Achse passend zum jeweiligen Ladungsschwerpunkt zu verschieben, bzw. um die Deichsel Aufliegelast zu verstellen. Bei Bootsanhängern ist dies aber nicht ohne Werkzeug möglich und in der Landwirtschaft wird dies meist durch hydraulische Unterstützung erreicht.

Bei Anhängern für den Autotransport findet man absenkbare Ladeflächen, was erreicht wird, indem die komplette Gummifederachse gegenüber der Ladefläche um eine Achse parallel zur Radachse gedreht wird. Dabei wird aber nicht prinzipiell die Position der Gummifederachse bezogen auf die Ladefläche in oder gegen Fahrtrichtung verschoben.

Der im Patentanspruch angegebenen Erfindung liegt insbesondere das Problem zugrunde, dass einachsige PKW-Anhänger und teilweise auch die weiter oben genannten existieren Anhängerlösungen nicht zusätzlich zu einem normalen PKW in einer gewöhnlichen Einzelgarage untergebracht werden können, weil dort rund um den PKW oft nur weniger als 40 cm Platz ist und die Höhe kein senkrechtes Aufstellen erlaubt. Dieses Problem wird durch die im Patentanspruch aufgeführten Merkmale gelöst.

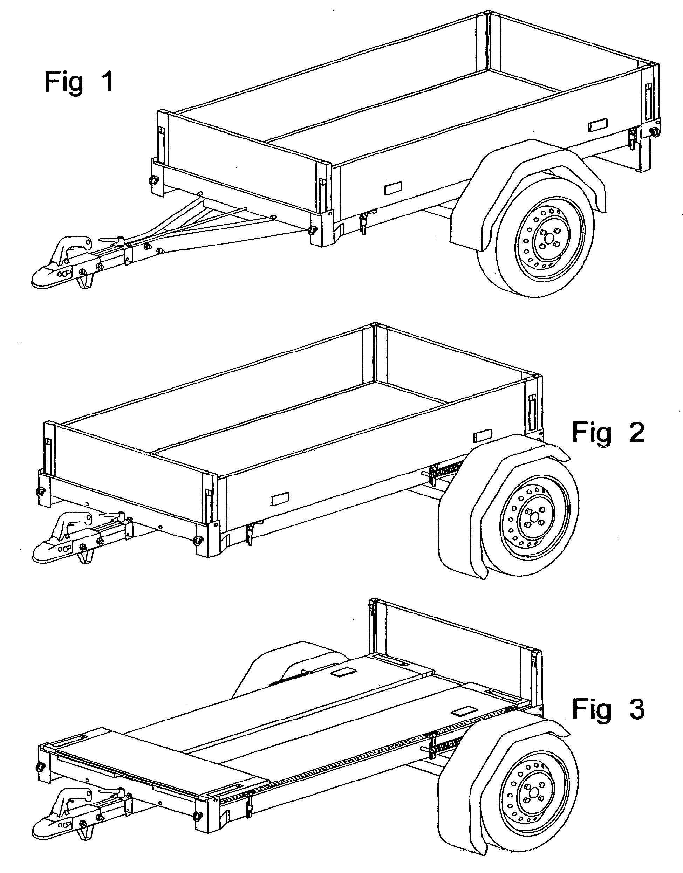

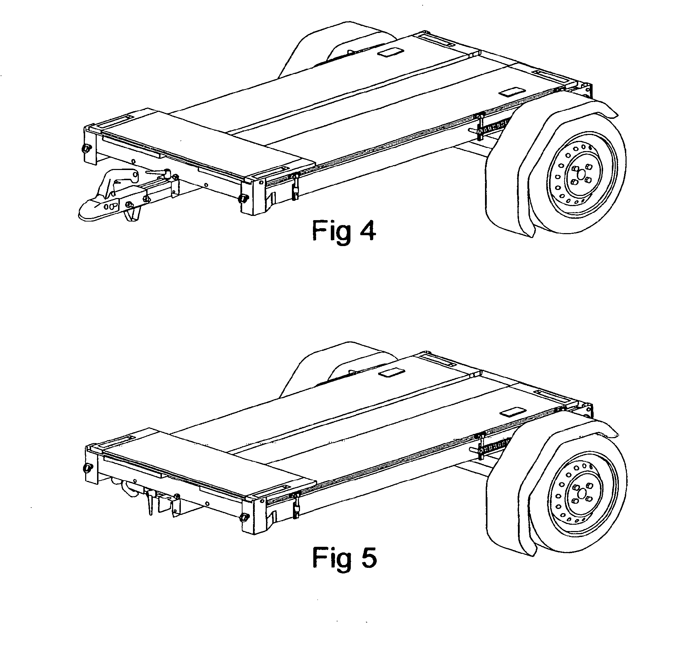

Die mit der Erfindung erzielten Vorteile bestehen insbesondere darin, daß der Anhänger für die Einlagerung ohne Werkzeug und in weit weniger als einer Minute durch eine Person flach zusammengeklappt werden kann und sich dabei die Ladefläche in eine für die Einlagerung günstige Position verschiebt (Fig 1-5).

### Ladeflächenverschiebung:

Der erste Schritt für ein Zusammenklappen ist die Verschiebung der Ladefläche nach vorne. Hiermit verschiebt sich die Achse bezogen auf die Ladefläche an z.B. das hintere Ende, was gerade die verschiedenen Einlagerungsvarianten ermöglicht. Dieser Schritt des Verschiebens ist in nur 2-3 Sekunden machbar und wird dadurch ermöglicht, daß die Verschiebung klar geführt ist und daß das dafür notwendige Öffnen und wieder Einrasten der Arretierung werkzeuglos erfolgt. Die Orientierung der Achse verändert sich bei der Verschiebung nicht oder möglicherweise nur minimal. Dadurch daß die Achse bei der Verschiebung am Boden bleibt und auch nicht in eine z.B. 180 Grad gedrehte Orientierung schwenkt, braucht man bei der Ladeflächenverschiebung auch nicht das Gewicht von Rädern und Achselement zu heben. Man muß auch nicht in einem ersten Schritt den Anhänger senkrecht auf seine Heckklappe stellen, was innerhalb einer Garage mit begrenzeter Deckenhöhe bei einer zu diesem Zeitpunkt noch herausschauenden Deichsel nicht möglich wäre. Die Räder sind nicht nur während, sondern auch nach der Verschiebung weiterhin am Boden. Damit läßt sich der bereits zusammengeklappte Anhänger auch noch unter Verwendung der Räder an seinen endgültigen Aufstellplatz manöverieren.

### Einlagerungsmöglichkeiten:

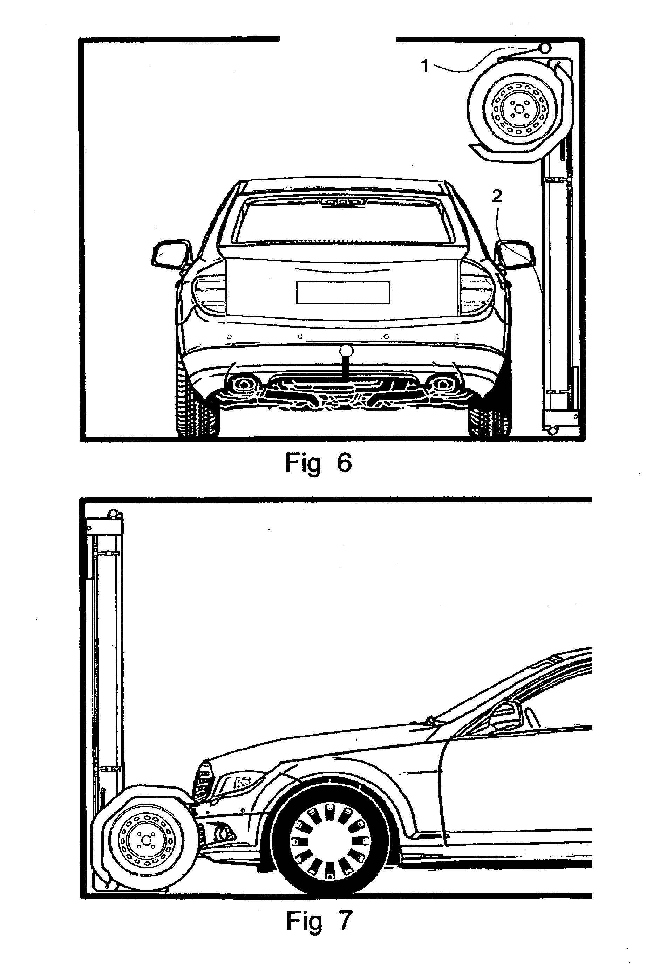

Für den zusammengeklappten Anhänger gibt es mehrere Einlagerungsmöglichkeiten. Primäres Ziel ist die senkrecht aufgestellte Lagerung an Garagen- oder Hauswänden. Hierbei gibt es einerseits die Variante, daß die schwere Achse unten ist (Fig 7), wodurch das Aufrichten mit akzeptablem Kraftaufwand von Hand durch eine Person möglich ist. Die maximale Platzeinsparung erzielt man durch das Aufrichten mit den Rädern nach oben (Fig 6), was wegen dem hohen zu bewegenden Gewicht von Achse und Rädern fast nur mit 2 Personen möglich ist und daher idealerweise mittels eines Zugseils (1) und einer Hand- oder Elektro- Winde durchgeführt wird, welche an den Garagenwänden montiert werden. Die Einlagerung an der Stirnseite oder der Seitenwand einer Garage mit den Rädern nach oben erlaubt quasi den vollen Platzerhalt für den PKW, da der flach geklappte und an die Wand gestellte Anhänger nur ca. 20 cm Platz benötigt.

Außerdem kann der Anhänger mit 4 Seilen und einer Winde flach unter die Decke gezogen werden. Denkbar ist auch, daß der Anhänger in Garagen flach auf dem Boden liegend gelagert wird und ein herkömmlicher PKW mittels zusätzlicher Auffahrbleche auf bzw. über dem Anhänger parken kann.

### Platzsparen bei Transport und Lagerung:

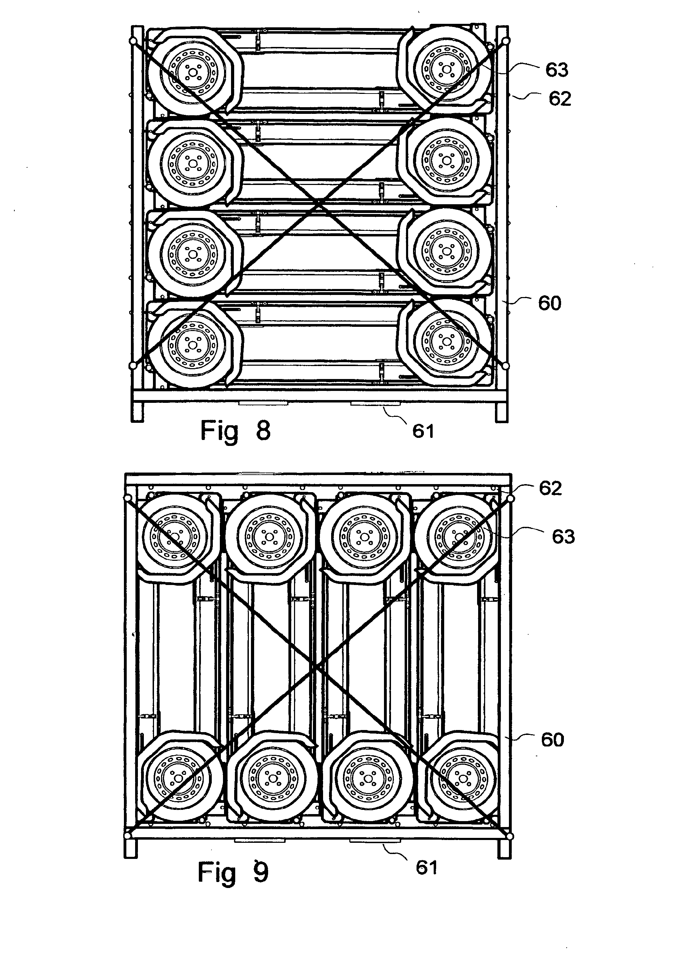

Ein weiterer Vorteil besteht in der Platzeinsparung entlang der gesamten Wertschöpfungskette von der Herstellung bis zum Verkauf an den Endkunden. Der Anhänger kann bei seiner Herstellung, Lagerung, Auslieferung und im Verkaufsumfeld platzsparend mit seinesgleichen gestapelt werden, was zu Transport- und Lagerplatzeinsparungen führt. Im Zuge steigender Ölpreise werden Einsparungsmöglichkeiten speziell bei der Auslieferung immmer wichtiger.
Insbesondere die Möglichkeit der Verlagerung der Achse zum Ende des Anhängers erlaubt eine Verdrehstapelung (Fig 8 und 9). Hier besteht ein Stapel aus mehreren flach (Fig 8) liegenden Anhängern, wobei jeder zweite auf dem Rücken liegt und noch zusätzlich um 180 Grad um die senkrechte Achse verdreht ist. Bei der Auslieferung von z.B. einachsigen ungebremsten Anhängern in der 750 kg Klasse lassen sich dadurch bis zu 8 Stapel je 8 Anhänger = 64 Anhänger auf einem LKW-Zug transportieren. Dies sind ca. 2 - 2,5 mal so viele wie bei herkömmlichen fertig montierten Anhängern. (Fig 9) zeigt ein ähnliches palettenartiges Gestell mit stehender Beladung. Im Vergleich zu anderen Lösungen ergibt die beschriebene Konstruktion noch den Vorteil, daß sie sich größtenteils aus Standardkomponenten (z.B Gummifederache, Bordwände, Verschlüsse) zusammensetzt und daß für die zusammengeklappte Auslieferung in den Handel keine sicherheitsrelevanten Teile demontiert werden müssen.

Für den Umbau von der Fahrstellung in die Einlagerungsstellung sind 4 Schritte notwendig:
1. Bewegung der Ladefläche nach vorne
2. Herunterklappen der Heckklappe mit den hinteren Eckrungen
3. Einklappen der sonstigen Seitenwände
4. Wegklappen oder Einfahren der Zugkugelkupplung

Je nach Einlagerungsform sind nicht alle Schritte notwendig. Z.B. kann ein ca. 195 cm langer Kastenaufbau in einer 225 cm hohen Garage auch ohne Entfernung der Zugkugelkupplung hochkant an die Wand gestellt werden. Für Anhänger ohne Kastenaufbau (ohne Bordwände) sind Schritt 2 und 3 nicht notwendig.

### Arten der Ladeflächenverschiebung:

Für das Verschieben der Ladefläche sind mehrere Prinzipien denkbar, wobei 2 Ausführungsbeispiele gezeigt werden. Fig 10 und 11 zeigen die Variante mit einer Semi-Rotationsbewegung mittels eines Schwenkelements, hier eines Schwenkrahmens, und Fig 12 und 13 zeigen eine rollengeführte Linearverschiebung. Gegenüber der lineraren Verschiebung hat der schwenkbare Rahmen den Vorteil, daß die bei der Fahrt auftretenden Längskräfte, sowohl die in Fahrtrichtung als auch in Gegenrichtung, über den Rahmen und nicht über die Arretierung aufgenommen werden. Somit muß bei der Schwenkrahmen- Variante die Arretierung nur ein Abheben der Ladefläche nach oben verhindern. Außerdem ermöglicht der schwenkbare Rahmen eine Bewegung mit weniger Kraftaufwand und weniger Risiko, daß sich der Mechanismus verkantet, bzw. bei leichten Rahmendeformationienen überhaupt noch funktioniert.

### Ausführungsbeispiel Semirotationsbewegung:

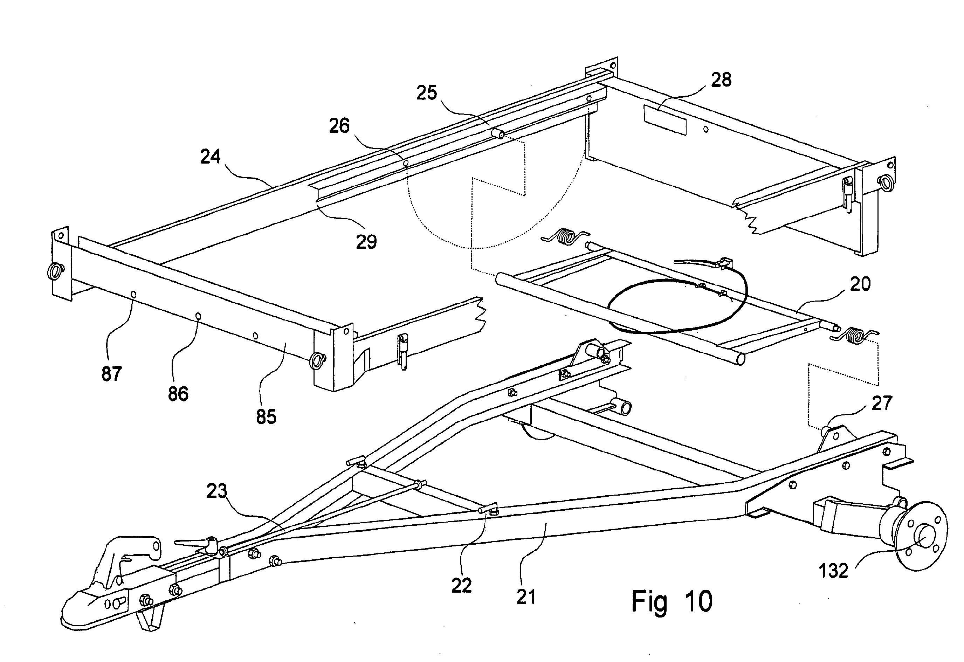

Bei der Semi-Rotationsbewegung (Fig 10) ist es unerheblich ob die beiden Endpunkte der Bewegung wie im Ausführungsbeispiel auf gleicher Höhe liegen oder höhenversetzt. Z.B. können im Fall einer Anwendung einer solchen Schwenkbewegung für Hochlader (Rädern unter der Ladefläche) die beiden Endpunkte der Schwenkbewegung auch bewußt unterschiedlich hoch gewählt werden, um z.B. im Fahrzustand den notwendigen Radabstand für die Federung zu gewährleisten, und um dann im Einlagerungszustand die Räder möglichst nah von unten an die Ladefläche zu bringen.

Bei der Semi-Rotationsbewegung beschreibt die Hinterkante der Ladefläche einen Halbkreis um eine Drehachse parallel zur Radachse, während die vordere Unterkante linear auf den Zugholmen aufliegend auf diesen entlanggleitet oder möglicherweise auch rollt.

Im Fahrzustand ist die Radachse leicht (z.B. 60 mm) hinter der Ladeflächen-Mitte positioniert und arretiert. Für die Einlagerung ist es aber interessant, daß die Achse deutlich außerhalb der Mitte liegt, z.B. wie gezeigt am hinteren Ende. Die Bewegung der Ladefläche wird über ein schwenkbares Element erreicht. Dieses Schwenkelement kann aus einem oder mehreren Hebeln oder Streben bestehen, es kann ein U-förmiger Rahmen sein, oder ein komplett geschlossener Rahmen sein.

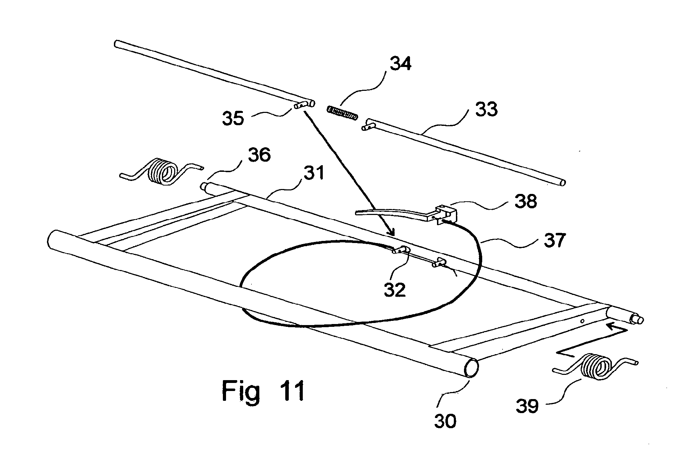

Das Ausführungsbeispiel zeigt dieses Element als geschlossenen schwenkbaren Rahmen (Fig 11), welcher auch den Arretierungsmechanismus (33) trägt. Diese Version mit einem geschlossenen Rahmen erlaubt die beste Verwindungssteifigkeit.
Der schwenkbare Rahmen (31) erfüllt 4 Funktionen:
- Für die Schwenkbewegung gibt er einen klaren geführten Weg mit Endanschlägen vor, so daß in 2-3 sec die Position gewechselt werden kann.
- Während der Schwenkbewegung gewährleistet er, daß sich der Kastenaufbau gegenüber der Achse nicht verwindet.
- Für die Schwenkbewegung dient er als Ansatzpunkt für die Lastausgleichsfedern (39) um die für das Anheben notwendigen Kräfte zu reduzieren.
- Und während des Gebrauchs dient er als Auflage für die Ladeflächenplatte zur besseren Verteilung der Last auf die sonstige Unterkonstruktion.

Innerhalb des einen Rundprofils des Schwenkrahmens (31) sind 2 Rastelemente, hier Rastbolzen (33), welche federbelastet (34) sind. Jeder Rastbolzen ist durch einen seitlichen Stift (35) durch je eine Langloch (32) von außen aktiviert. Dieses geschieht durch einen Bowdenzug (37) und einem Handhebel (38). Der Handhebel ist im Bereich oberhalb des Kennzeichenschildes oder oberhalb eines Rückstrahlers des hinteren Unterfahrschutzbleches positioniert. Dieses Blech hat einen Ausschnitt (Fig 10) (28) um einen höheren Bewegungsspielraum für den Hebel zu ermöglichen. Der Ausschnitt kann noch zusätzlich mit einer Griffmulde ausgestattet sein um den Hebel vor aufspritzendem Schmutz zu schützen. Der Schwenkrahmen ist mit den Öffnungen (30) drehbar (25) am Ladeflächenseitenprofil (24) befestigt. Die herausschauenden Enden (36) der Arretierbolzen (33) greifen in den 2 möglichen Stellungen in die Rasttöcher (26) ein. Die schräg zulaufende Unterkante (29) des Ladeflächenseitenprofils erlaubt auch ein automatisches Einrasten, ohne dabei den Betätigungsgriff (38) gezogen zu haben.

Das Rohr (31) des Schwenkrahmens, welcher auch die Arretierstäbe beinhaltet, ist auch gleichzeitig die Achse für die Aufnahme von je einer Torsionsfeder (39) rechts und links. Diese Federn dienen dazu, das Anheben der Ladefläche aus den jeweiligen Endpositionen zu erleichtern. Die Federn sind maximal entspannt, wenn der Rahmen ca. vertikal nach oben im Scheitelpunkt steht, und sie haben die größten Rückstellmomente bei einem Schwenken des Rahmens ca. 90 grad nach vorne und auch 90 grad nach hinten. Anders als im Ausführungsbeispiel mit Torsionsfedern lassen sich die Lastausgleichsfedern auch als Zugfedern unterhalb des Schwenkrahmens gestalten, oder als Torsions-Stabfedem.
Sowohl die Drehachsen des Schwenkrahmens als auch die Arretierung müssen nicht unbedingt gleichzeitig auch in den einzelnen Rahmenprofilen mittig integriert sein, sondern können auch außerhalb der Querprofile positioniert sein.

### Ausführungsbeispiel Linearverschiebung:

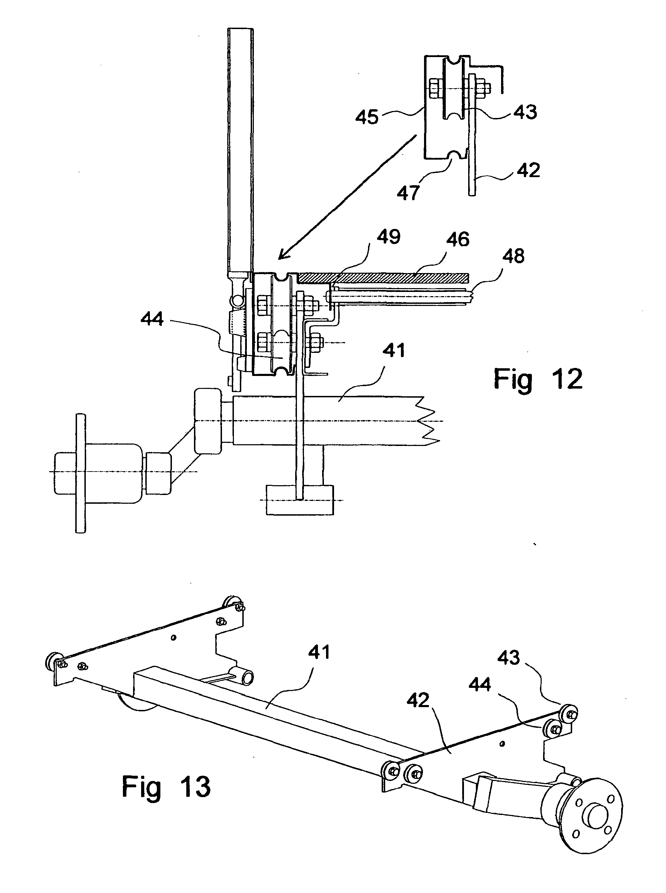

Alternativ zum Schwenkrahmen zeigen Fig 12 und 13 eine insgesamt lineare Verschiebung. Hierbei hat die Gummifederachse (41) spezielle Auflageböcke (42) an welchen obere (43) und untere (44) Laufrollen befestigt sind. Die Ladefläche (46) ist eingefaßt mit einem seitlichen Randprofil (45), welches ausgeprägte Führungen (47) für die oberen und unteren Rollen besitzt. Dieses Profil mit der Funktion einer Laufschiene, kann sowohl ein Aluminiumstrangpress-Teil sein, ein separat eingeschraubtes Schienenelement, oder wie im gezeigten Beispiel aus dem Stahlblech-Randprofil gekantet sein. Endanschläge werden durch Querverschraubungen durch diese Rahmenprofile erreicht. Auch in diesem Ausführungsbeispiel ist eine sichere Arretierung durch Rastbolzen ähnlich wie am Schwenkrahmen erreicht, wobei die Rastbolzen in Löcher im Innenbereich des Randprofils (49) eingreifen.

### Heckbedienung:

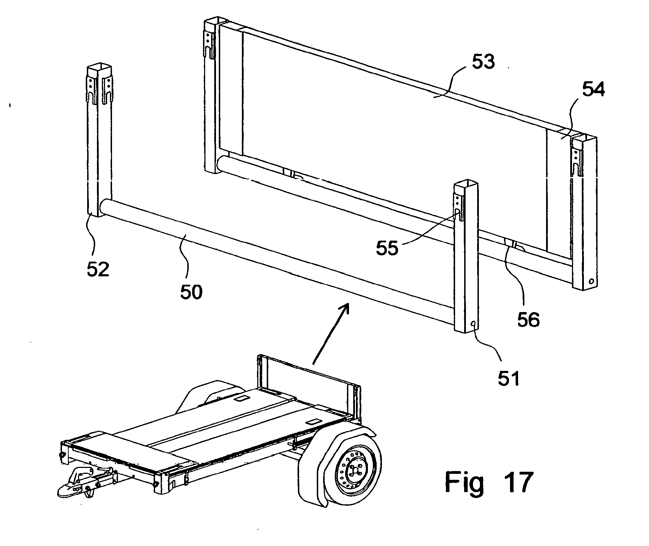

Im Ausführungsbeispiel dient das hintere Querrohr (Fig 17) (50) zur Halterung der hinteren Eckrungen (52) auch gleichzeitig als Griff für beide Hände zum Verschieben der Ladefläche. Der Hebel (38) für die Schwenkrahmen-Arretierung ist aus Bedienersicht direkt hinter dem Querrohr (50) (in Fahrtrichtung vor dem Querrohr) oberhalb des Kennzeichenschildes positioniert, so daß man gleichzeitig die Arretierung lösen und die Ladefläche anheben kann, ähnlich wie der Hebel einer Fahrradbremse an der Lenkerstange.

Für die Verbindung vom Hebel zur Arretierung und für die Arretierung selber gibt es weitere Varianten zusätzlich zu den gezeigten. Die Arretierung muß z.B. nicht bolzenförmig sein. Jegliche Arten der formschlüssigen Verbindung sind denkbar. Die Arretierung muß nicht unbedingt durch einen Bowdenzug ausgelöst werden. Wichtig ist eine Fernbedienung, so daß auf beiden Seiten die Ladefläche und die Achse miteinander arretieren können, und dies bequem von einer hinter dem Anhänger stehenden Person bedient werden kann. Der Bowdenzug bietet den Vorteil durch seine Flexibilität, weil der Abstand von Arretierpunkt und Hebel in den verschiedenen Endpunkten unterschiedlich ist. Schub-, Zug- oder Drehgestänge sind auch denkbar. Desweiteren besteht die Möglichkeit daß jede Seite einen eigenen Hebel hat oder zumindest 2 separate, aber von einem gemeinsamen Hebel ausgehenden Fernbedienungen. Im Falle eines Bowdenzugs kann dies z.B. 1 Hebel mit 1 Bowdenzug, 1 Hebel mit 2 Bowdenzügen (einen für rechts und einen links), oder 2 Hebel mit je einem Bowdenzug sein. Insbesondere für die Ausführungsvariante der Linearverschiebung der Ladefläche sind fast alle Arretierungsarten von der Längsverstellung eines PKW-Vordersitzes denkbar.

### Ladeflächenvorderkante:

Unabhängig von den Ausführungsbeispielen mit Schwenkrahmen oder lineare Verschiebung der Ladefläche macht die vordere Kante der Ladefläche eine lineare Bewegung.
Dabei gleitet oder rollt das vordere Ladeflächenprofil (Fig 10) (85) auf den Zugholmen (21) und wird mittels eines Führungselements, hier Führungsstabes (23) geführt, welcher durch eine Öffnung (86) des vorderen Ladeflächenprofils (85) läuft. Dieser gewährleistet ein selbständiges Einfädeln der vorderen Fixierbolzen (22) in die Öffnungen (87) und vermeidet ein Weggklappen der Zugholme, wenn der Anhänger senkrecht stehend gelagert wird.
Die Fixierbolzen (22) garantieren die formschlüssige Verbindung von Ladeflächen und Zugholmen in der Fahrstellung. Bei entsprechender Auslegung des Führungsstabs (23) und insbesondere im Fall einer zentralen Deichsel kann der Führungsstab auch die Funktion des Formschlusses im Fahrzustand übernehmen. Desweiteren ist es auch denkbar diesen Führungsstab als Seil auszulegen.

Beim Verschieben der Ladefläche in die Einlagerungsstellung verkürzt sich automatisch auch der unter der Ladefläche herausragende Teil der Zugholme. Die verbleibende Länge ist minimiert, aber erlaubt noch den Zugang für ein Trennen der Kugelkupplung vom Zugfahrzeug. Andere nicht gezeigte Ausführungmögtichkeiten erlauben auch, die Zugholme oder Deichsel nicht fest an der Achse zu befestigen, sondern mit geeigneten Drehverbindungen am Schwenkrahmen und an der Achse, und zwar so, daß sich durch das Verschieben der Ladefläche nach vorne auch gleichzeitig der Abstand zwischen Achse und Kugelkupplung verkürzt. Dies ermöglicht, daß sich der nach dem Verschieben der Ladefläche noch verbleibende Teil der unter der Ladefläche herausschauenden Zugholme noch mehr verkürzt. Dies ist einerseits interessant für Anhänger mit kurzer Ladefläche und es erlaubt prinzipiell den Einsatz längerer Zugholme oder Deichseln, was sich positiv auf das Fahrverhalten auswirkt.

### Kotflügel:

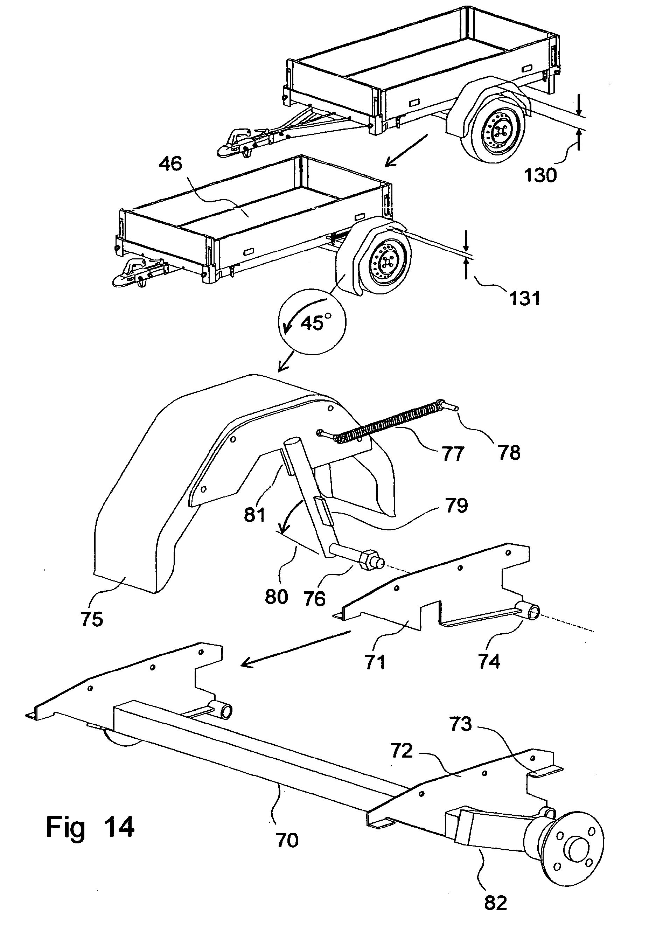

Die oberen Punkte der Kotflügel sind im Falle eines Tiefladeranhängers in der Regel höher als die Ladefläche und auch noch höher als die Ladefläche inklusive der flach auf sie geklappten Bordwände. Um das Maß der nach oben über die Ladefläche herausstehenden Kotflügel im Einlagerungsfall zu reduzieren, sind die Kotflügel zwar so schwenkbar aufgehängt, daß sie im Fahrzustand den notwendigen Abstand zum Reifen für das Eintauchen der Federung haben (Fig 14) (130), aber im Einlagerungszustand dieser Abstand minimiert ist (131). Im Folgenden wird für die Variante eines Tiefladers berücksichtigt, daß sich bei einem Verschieben der Ladefläche nach vorne sich nicht die Kotflügel mit der Ladefläche nach vorne verschieben, sondern prinzipiell zusammen mit den Rädern hinten bleiben. Sie machen aber dabei eine Bewegung näher an der Reifen heran. Für eine solche Verlagerung in eine neue Position gibt es Möglichkeiten des vollständigen Demontierens, oder es gibt geführte Bewegungen. Bei den geführten Bewegungen sind Schwenkbewegungen, Linarbewegungen oder Paralleogrammbewegungungen denkbar.

Das Ausführungsbeispiel hat insbesondere durch die Wahl einer Schwenkbewegung und durch die besondere Wahl des Drehpunktes mit einer Drehachse parallel zur Radachse mehrere Vorteile. Zum einen wird der vertikale Abstand zum Reifen reduziert. Durch eine genaue Wahl des Anschlags läßt sich der Kotflügel so bewußt auf wenige mm Abstand zum Reifen halten, so daß der zusammengeklappte Anhänger noch manövriert werden kann, ohne daß die Kotflügel auf den Reifen schleifen. Hierbei ist inbesondere die Hauptinnenfläche der Kotflügel gemeint, und nicht die seitlichen Flanken. Desweiteren hat die Wahl des Drehpunktes hinter der Radachse den Vorteil, daß sich bei einer ca. 45 Grad Verdrehung des Kotflügel dieser auch insgesamt nach vorne bewegt. Dieses bewirkt, daß beim senkrechten Aufstellen des flachgelegten Anhängers mit der Heckseite nach unten die Räder und damit der Schwerpunkt sehr nah an den Garageboden herankommen, ohne daß die Hinterkante der Kotflügel im Weg ist. Wenn die Räder möglichst weit nach hinten verschoben werden können (ohne daß der Kotflügel im Weg ist), bedeutet dies auch eine möglichst lange Verschiebestrecke und damit auch ein möglichst starkes Einziehen der Zugholme unter die Ladefläche. Dies ermöglicht entweder längere Zugholme oder kurze Einlagerungslänge.

Die schwenkende Art der Kotflügelbewegung läßt sich sehr leicht mittels eines Wirkelements, d.h. z.B. Zugelementes (z.B. einer Feder, eines Gummizugs oder Gestänges) oder auch mit einer Zahnrad- oder Kettenverbindung an die Ladeflächenverschiebung koppeln. Dadurch ist weder ein separates manuelles Bewegen oder Arretieren der Kotflügel notwendig. Der Vorteil ist damit nicht nur eine werkzeuglose Verschiebung, sondern sie geschieht sogar automatisch mit der Bewegung der Ladefläche.

Im Ausführungsbeispiel sind die Kotflügel (Fig 14) (75) drehbar um eine Achse (76) parallel zur Radachse befestigt. Die Position der Kotflügeldrehachse (76) ist bewußt ca. 133 mm hinter und 21 mm oberhalb der Radachse (132) gewählt, passend für gängige 145/80 R13 Reifen, so daß die Kotflügel in der Fahrstellung den notwendigen vertikalen Abstand (130) (z.B. ca. 120 mm) zu den Rädern zum Eintauchen der Federung haben und auch gleicheitig die ideale Einlagerungsstellung ermöglichen. Allgemein bedeutet dies, daß der Kotflügeldrehpunkt ca. um 25% des Reifenaußendurchmessers hinter der Radachse liegt, und ca. 4% darüber.
Ein Wirkelement wie z.B. in diesem Fall eine Zugfeder (77), befestigt am seitlichen Ladeflächenprofil (78), zieht in der Fahrstellung den Kotflügel nach hinten, so daß der Anschlag (79) gegen die Auflageplatte (73) der Auflageböcke (72) stößt. Wenn die Ladefläche nach vorne in die Einlagerungsstellung kommt, zieht die gleiche Feder (77) den Kotflügel nach vorne. Dabei macht der Kotflügel eine ca. 45 Grad (80) Drehbewegung bis die Aussparung (81) als Anschlag gegen den Schenkel (82) der Gummifederachse (70) stößt. In dieser Stellung ist der Kotflügel (75) mit minimalstem Abstand (131) direkt über den Rädern, um Platz für die Einlagerung zu sparen, aber den Anhänger noch mittels der Räder verschieben zu können. Die Anschläge lassen sich idealerweise mit höheneinsteilbaren Elementen wie z.B. Einschraubgummipuffem begrenzen, welche z.B. auch bekannt sind bei PKW-Motorhauben.

Andere Lösungsvarianten sind auch möglich, bei denen jeder Kotflügel aus mehreren Segmenten aufgebaut ist, und sich diese gegenseitig zueinander bewegen, z.B. zwei Hälften die sich näher aneinander bewegen, oder 2 Kreis-Segment-Teile die sich mehr oder weniger weit durch eine bogenförmige Bewegung überlappen.

### Eckrungen und Heckklappe:

Nach Verschiebung der Ladefläche (46) wird im Falle eines Anhängers mit Kastenaufbau danach die Heckklappe (Fig 17) (53) nach unten geklappt. Im Ausführungsbeispiel ist die Heckklappe (53) nicht an einem festen Teil des Kastenaufbaus sondern an dem hinteren Querrohr (50) angeschlagen (56). Daher ist es nicht notwendig die Verschlüsse (54) der Heckklappe zu öffnen (hier sichtbar als Rückseite von einem Langwegverschluß dargestellt), sondern statt dessen die hinteren Verschlüsse der seitlichen Bordwände, welche von vorne (55) in die Eckrungen eingreifen. Dadurch können die hinteren Eckrungen (52) von den seitlichen Bordwänden gelöst werden und als ein Teil zusammen mit der Heckklappe (53) hintenrum um den Drehpunkt (51) nach unten heruntergeklappt werden. Die Hauptvorteile dieser festen Verbindung der hinteren Eckrungen mit dem drehbaren hinteren Querrohr sind, daß die Eckrungen Querkräfte und Momente durch z.B. das Ladegut aufnehmen können und trotzdem mit einem Handgriff sehr schnell beide Eckrungen gleichzeitig heruntergeklappt werden können. Außerdem entstehen nicht wie bei typischen Hochladern mit einsteckbaren Eckrungen separat zu handhabende Teile.

### Bordwände:

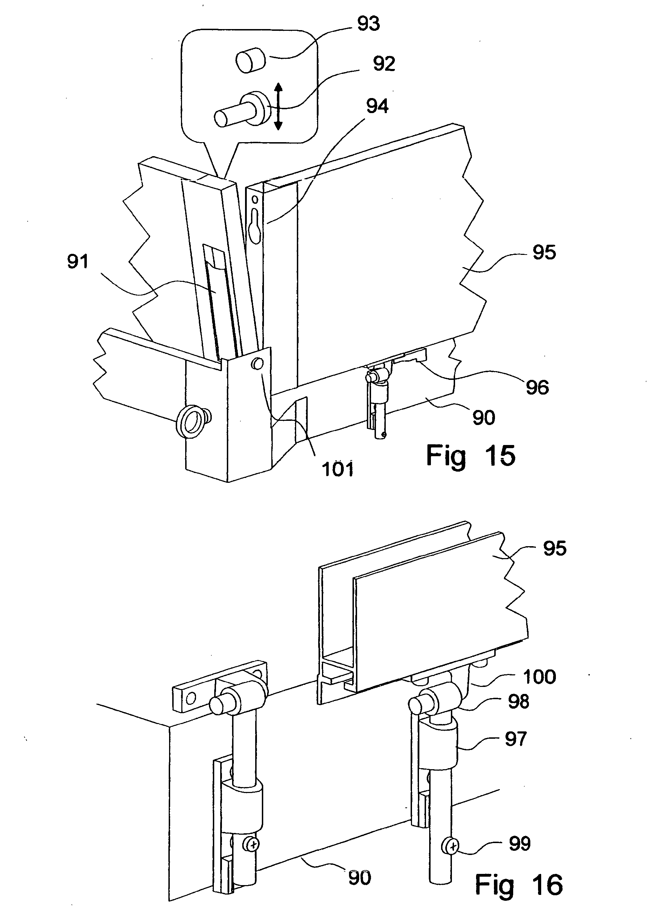

Anschließend werden die beiden Verschlüsse (Fig 15) (91) der vorderen Bordwand gelöst und die beiden seitlichen Bordwände (95) nach innen geklappt, so daß sie zur Lagerung flach auf der Ladefläche aufliegen. Die Verschlüsse (91) sind als Langwegverschluß gezeigt, wobei ein fixer Positionierstift (93) und ein bewegter Hutbolzen (92) in Fahrtrichtung nach hinten herausstehen und in die passenden Öffnungen (94) der Stirnseiten des Abschlußprofils der seitlichen Bordwände eingreifen. Als Scharnier können z.B. Klavierbänder verwendet werden oder Scharniere welche direkt aus dem Aluminiumstrangpressprofil der seitlichen Bordwände gebildet sind, als verdrehbare Kulisse oder segmentweise wie ein Klavierband ausgefräst und mit eingeschobener Drehachse. Desweiteren sind Filmscharniere unter Verwendung von Gummi, Gewebe, Polyurethan oder sonstigen flexiblen Material möglich, welche unten an dem Bordwandprofil befestigt sind. Hierbei eignen sich diverse Befestigungsarten, wie z.B. ein Keder, eine Klemmleiste oder eine permanente Polyurethan-Aluminium Verbindung wie bei dem Produkt "Poliall" der Fa. Pastore und Lombardi im Einsatz für LKW Hecktüren.

Im Ausführungsbeispiel wurden als Scharnier für die seitlichen Bordwände pro Längsseite 3 Scharnierelemente verwendet. Dabei wird ein vertikaler Augenbolzen (98) durch ein kurzes vertikales Führungsrohr (97) gesteckt. Das obere Scharnierelement (100) ist von unten an der Bordwand (95) verschraubt und greift in den Augenbolzen (98).
Zum Klappen nach innen muß die Bordwand (95) zunächst um ca. 40 mm nach oben gehoben werden, welches dadurch erreicht wird, daß der Augenbolzen (98) in dem kurzen Rohr (97) ca. 40 mm bis zum Endanschlag (99) hochgezogen wird. Danach kann nach innen geklappt werden. Diese Ausführungsvariante hat 2 besondere Vorteile: Es lassen sich die seitlichen Bordwände auch leicht nach Entfernen von Endanschlag (99) komplett entfernen, z.B. zum Transport von Motorrädern, und sie sind nicht so empfindlich gegen Schäden, falls beim Zuklappen noch Ladegutreste nahe der Drehachse liegen. Weiterhin sind diese Scharniere unempfindlich gegen Verschmutzung und leicht als Ersatzteil auszutauschen. Sowohl die Scharnierteile, als auch die Bordwände sind Standardelemente aus dem Anhängerbau.

Als letzte Bordwand wird die vordere Bordwand nach innen geklappt. Hierbei sind auch diverse Scharniere oder Achsen möglich. Das Ausführungsbeispiel zeigt einen Bolzen (Fig 15) (101) als Drehachse, welche in den unteren Bereich des Langhebelverschluß (91) hineinragen. Die Verschlüsse (91) der vorderen Bordwand sind so ausgelegt, daß sie sowohl die seitliche und vordere Bordwand in der Fahrstellung fest verbinden, als auch im flach gelegten Zustand die vordere Bordwand flach fixieren. Letzteres soll gewährleisten, daß im Zustand der senkrechten Lagerung (insbesondere wenn die Anhängervorderseite oder die Oberseite nach unten zeigt) alle nach innen geklappten Bordwände gegen unbeabsichtiges Aufklappen gesichert sind.
Das Ausführungsbeispiel zeigt wie der Hutbolzen (92) (bzw. Schraube mit großem Kopf) hinter ein Blech (96) greift, welches von unten an der seitlichen Bordwand (95) befestigt ist. Mit dem Flachlegen der seitlichen Bordwand dreht sich das Blech (96) in die Horizontale und stellt mit der Außenkontur die Hälfte der schlüssellochförmigen Kontur wie (94) dar.

Als Alternative zur Reihenfolge des Einklappens der Bordwände ist es auch möglich, daß erst die vordere Bordwand nach innen geklappt wird, und erst danach die beiden seitlichen Wände.

Als Alternative zur Klapprichtung ist auch denkbar, daß die hintere Klappe nicht nach außen herunterklappt, sondern auch nach innen auf die Ladefläche.

Als Verschlüsse für die Bordwände eignen sich idealerweise Langwegverschlüsse, weil diese nicht über die Bordwandkonturen herausstehen und dadurch im flach geklappten Zustand zu den insgesamt minimalen Außenabmessungen beitragen. Als Alternative zu diesen Langwegverschlüssen speziell für die vorderen Eckrungen eignen sich auch an der vorderen Bordwand horizontal angebrachte Exzenter-Verschlüsse welche mittels eines Bleches, Riemens, Seils oder Gummibandes entweder um die vorderen Kastenecken herum in die seitlichen Bordwände eingehakt werden, oder im flachen Zustand in den Ladeflächenrahmen eingehakt werden.

Als Alternative zum direkten Verbinden von vorderer und seitlichen Bordwänden mit einem Verschluß besteht auch die Möglichkeit zum Einsatz vorderer Eckrungen. Dies ist speziell interessant, da man den Anhänger mit heruntergeklappter vorderer Bordwand zum transportieren von langem Ladegut oder einem Motorrad nutzen kann. Für dieses "Durchladen" wird die Stabilität bzgl. Querkräfte auf die Seitenwände dann durch die hinteren und vorderen Eckrungen erreicht. Die zusätzlichen vorderen Eckrungen können sowohl komplett entfernbar gestaltet sein als auch wie die hinteren Eckrungen wegklappbar.

Anstatt der oben genannten Scharnierverbindungen für die Bordwände ist auch das komplette Entfernen der Bordwände denkbar, oder es ist auch das Entfernen und dann um 180 Grad verdrehte wieder Aufstecken auf die Scharnierbolzen möglich, so daß das Vorderende der seitlichen Bordwände dann zur Lagerung nach hinten zeigt.

Desweiteren sind auch Klappmechanismen möglich, bei denen eine oder mehrere Rungen mit den Bordwänden Bordwände fest verbunden sind. Zum Einklappen wird diese ganze Einheit zunächst angehoben und danach nach innen geklappt. Hierbei werden beim Anheben die Rungen aus ihrem Einsteckprofil vertikal ein Stück herausgezogen und dann geklappt, wie dies z.B. bei Mehrweg Stahlpaletten mit einklappbarem Aufsatzahmen üblich ist.

### Platzproblem Deichsel:

Als letzter Schritt des Zusammenklappens wird die Zugkugelkupplung mit dem Deichselstummel aus der Arretierung gelöst und mittels von Schwenkbewegungen unter die Ladefläche geklappt oder eingefahren. Aber auch ohne Verwendung einer wegklappbaren oder einfahrbaren Deichsel ist es möglich die nach der Verschiebung der Ladefläche noch unter dieser Ladefläche herausschauende Länge der Zugholme und Kugelkupplung zu minimieren. Während meistens die Zugkugelkupplung mit den Zugholmen so verschraubt ist, daß die Kugelkupplung von außen über die Zugholme greift, kann dieses auch andersherum verschraubt werden. Dadurch können die Zugholme von außen an der Kugelkupplung bis quasi an den Fuß des Kupplungshebels heranreichen. Dadurch kann die Ladeflächenvorderkante auf dem Zugholm bis an diesen Fuß nach vorne gleiten. Dieses geschieht idealerweise mit einer besonderen Form des Kupplungshebels, der dann nicht nach hinten zeigt, sondern z.B. als querstehender Bügelgriff ausgestattet ist. Desweiteren ist auch ein komplettes Entfernen der Zugkugelkupplung oder zumindest deren Griffes möglich.

Auch ist eine Schenkbewegung ca. 180 Grad unten herum nach hinten denkbar, aber durch die Person schwer zu erreichen und der Griff und die Stütze unter der Kugelkupplung brauchen dann senkrecht auf dem Kopf stehend noch relativ viel Platz. Bei vielen Anhängern mit wegklappbaren Zugholmen ist der Drehpunkt im Bereich zwischen Ladeflächenvorderkante und Radachse. Dies ermöglicht zwar neben einer kippbaren Ladefläche auch das senkrechte Aufstellen des Anhängers in einer Garage, aber der umgekappte Zugholm-Teil läßt sich nicht flach unter die Ladefläche heranklappen, weil die Achse noch im Weg ist. Der flachste zusammengeklappte Zustand wird dadurch erreicht, indem nicht nur zu einer Stelle hingeklappt wird, wo die Achse nicht im Weg ist, aber auch dadurch, daß die Zugkugelkupplung auch noch um ca. 90 Grad um die Deichselachse verdreht wird. Dadurch zeigt dann im zusammengeklappten Zustand eine seitliche Flanke der Zugkugelkupplung von unten and die Ladefläche.

### Ausführungsbeispiel Klappdeichsel:

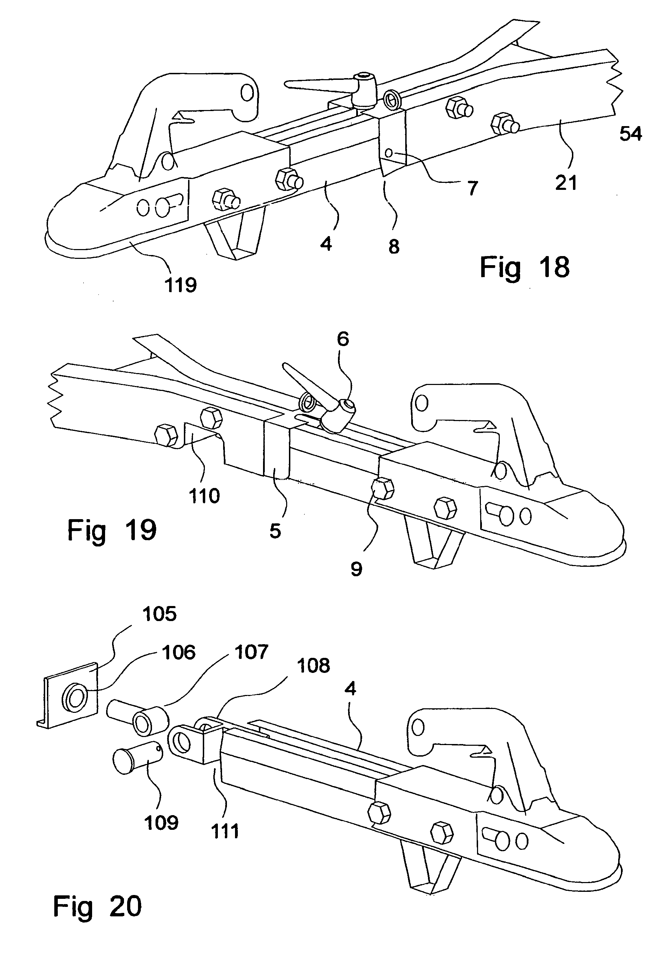

Diese Klappbewegung ist im Ausführungsbeispiel (Fig 18-21) dadurch gelöst, daß nach dem Lösen der Arretierung (6) die Zugkugelkupplung (119) mit dem Deichselstummel (4) zunächst ca. 90 Grad nach unten aus dem Führungselement, in diesem Fall aus der U-förmigen Führung (5) herausklappt. Danach wird sie ca. 90 Grad zu einer Seite geklappt und in einer letzen Bewegung mittels dem Kupplungsverschluß auf einer Kugel oder einem Ring (113) oder einer Scheibe fixiert. Die Verwendung von einem Ring oder Scheibe dient der Gewichtsreduzierung, da die Kupplung in diesem Zustand keine Fahrkräfte aushalten muß.
Während der ganzen Bewegung zeigt der Kupplungsgriff passend zur Bedienperson, welche für diesen Einklappvorgang lediglich die Anhängervorderseite anheben muß oder temporär aufständem kann.

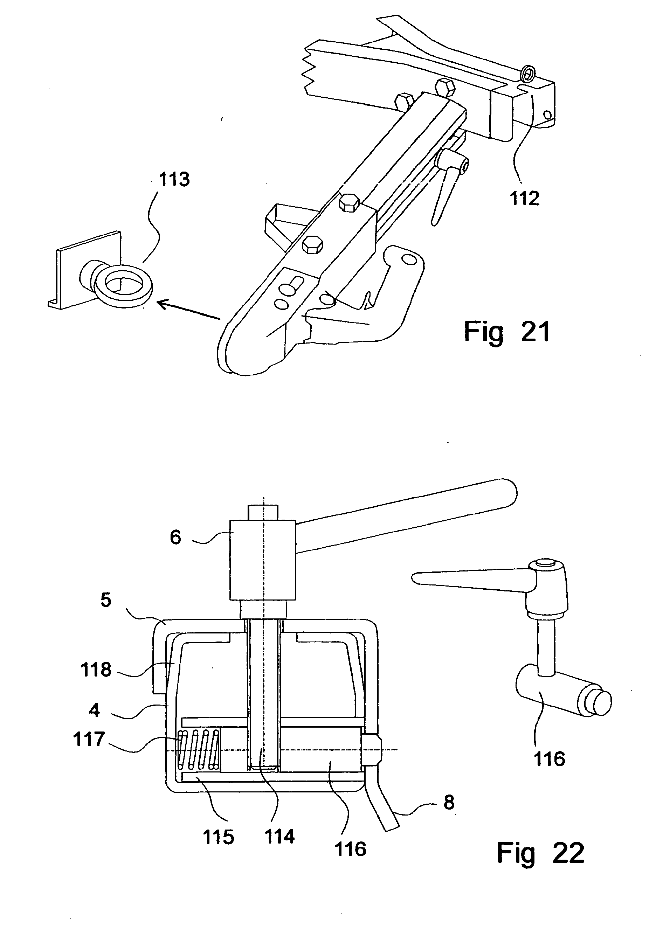

Das Führungselement kann wie gezeigt ein U-förmiges Profil (5) sein, welches zwischen den beiden Zugholmen verschraubt (9) ist. Bei einer zentralen Mitteldeichsel kann das U auch einfach aus dem Deichselprofil selber geformt sein. Das U-Profil und der hinein passende Deichselstummel (4) weisen idealerweise schräge seitliche Flanken auf, bzw. teilweise schräge Flanken (Fig 22) (118) oder schräge Rippen. Diese dienen dem einfacheren Einführen des Deichselstummels und dem vibrationsfreien Festklemmen. Ca. auf der Mittel-Längsachse in dem U-Profil ist der klappbare Deichselstummel mittels eines kardanartigen Gelenkes (Fig 20) (105-109) mit einer Querwand (105) in dem U-Profil verbunden. Dieses Gelenk erlaubt sowohl das Herunterklappen als auch das seitliche Wegdrehen. Im Beispiel ist die Drehbewegung des Kardangelenks mittels einer Augenschraube (107) ausgeführt, welche sich in der eingeschweißten Gewindebuchse (106) drehen kann. Andere Drehverbindungen ohne ein Gewinde sind natürlich auch möglich.
Die Augenschraube ist mit einem Bolzen (109) drehbar mit der Gabelöffnung (108) verbunden, welche fester Bestandteil des Deichselsummels (4) ist. Die einseitige Aussparung (111) direkt hinter der Gabelöffnung und die einseitigen Aussparungen (110) sowohl in dem U-Profil (5) als auch in dem darüberliegenden Zugholm ermöglichen das Schwenken zur Seite.

Die Arretierung (Fig 22) erfolgt mittels eines federbelasteten (117) Bolzens (116), welcher in einem Rohr (115) geführt ist und in eine Bohrung (7) in der seitlichen U-Profil-Wand eingreift. Das Wandprofil ist darunter leicht schräg (8) zulaufend um ein automatisches Einrasten zu gewährleisten. Anschließend werden Deichselstummel und U-Profil miteinander verspannt. Dafür dient eine Klemmhebelschraube (6), die in dem Bolzen (116) mit einem Gewinde (114) endet und durch Drehung des Bolzens in Fahrtrichtung nach vorne klappbar ist. Im U-Profil (5) befindet sich eine nach vorne offene Aussparung (112) in welche der Klemmhebel hereinschwenkt.

Andere Arretierungsmechanismen sind auch denkbar wie z.B. der Einsatz von Exzenterverschlüssen oder Verschlüsse von Kipperbordwänden. Desweiteren sind andere Führungselemente des Deichselstummels denkbar. Z.B. kann diese Führung anstatt durch das nach unten offene U-Profil auch durch sonstige geformte formschlüssige Verbindungen erreicht werden, wie z.B. ein Zentrierdorn, Bolzen, ... welche ein Herausklappen des Deichselstummels nach unten ermöglichen.

### Ausführungsvariante Einfahrdeichsel:

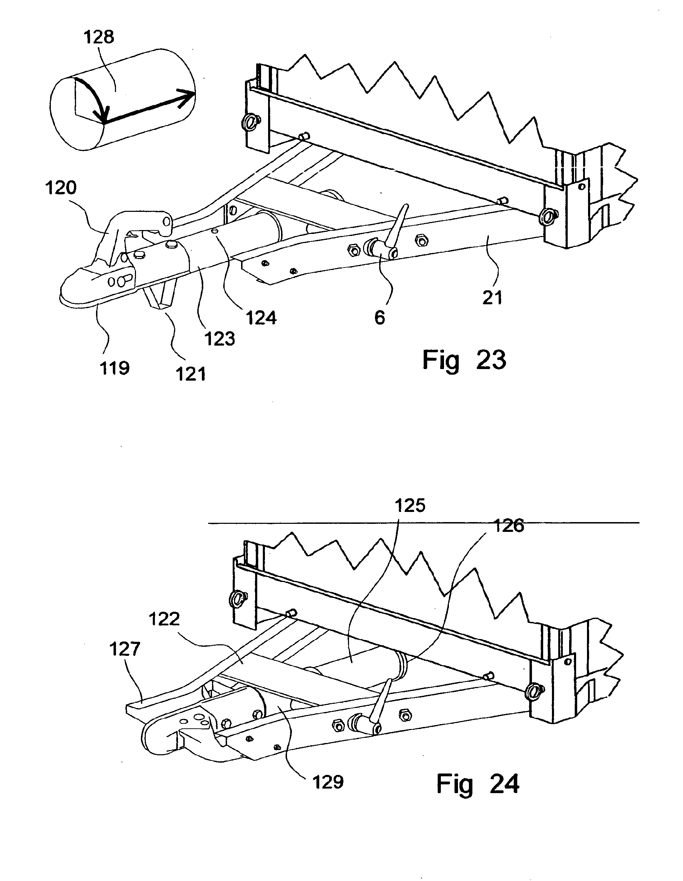

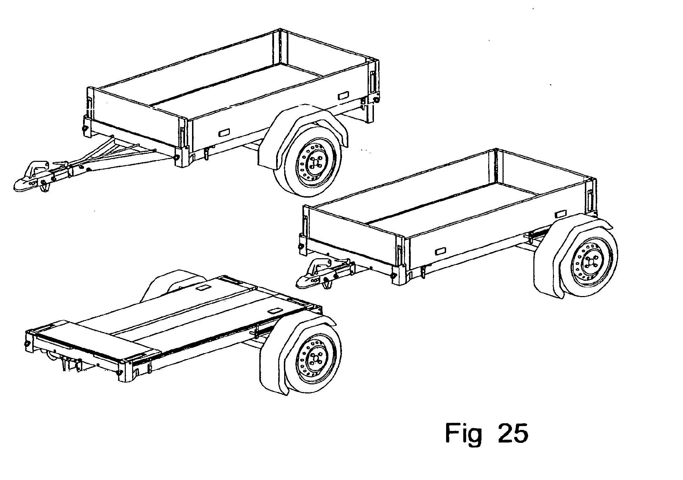

Als zweites Ausführungbespiel für das Entfernen des Deichselstummels mit der Zugkugelkupplung ist das Einfahren. Hierbei wird anstatt eines seitlichen Wegklappens der Deichselstummel linear unter die Ladefläche verschoben, nachdem zuerst eine Arretierung gelöst wird und der Deichselstummel um 90 Grad gredeht wird. Fig 23 (128) zeigt diesen Bewegungsablauf. Dieses Verfahren bietet den Vorteil, daß es einfacher zu fertigen ist und sich aus geschlossenen und damit stabilen Rundprofilen zusammensetzt und damit weniger Gewicht ausmacht. Die Zugholme (21) werden mit großem seitlichen Abstand zueinander montiert (Fig 23 und 24) und sind mit einer Quertraverse (122) ähnlich wie die Auflaufbremsen bei gebremsten Anhängern verbunden. Die Zugkugelkupplung (119) hat durch ihren Griffs (120) und den Deichselfuß (121) eine gewisse Höhe. Nach 90 Grad Drehung des Deichselstummels (123) um seine Längsachse macht diese Höhe dann die Breite aus, welche dann noch zwischen die weit auseinanderliegenden Zugholme paßt. Die Spitze der Zugholme (127) dient lediglich als Gleitfläche für die Ladeflächenvorderkante bei der Ladeflächenverschiebung. Der Deichselstummel (123) ist vibrationsfrei in einem Rohrstück (129) geführt, welches fest mit der Quertraverse (122) verbunden ist. Am Ende des Deichselstummels befindet sich ein Endanschlag (126). Zum Arretieren in den beiden Stellungen von Fahrbetrieb und Einlagerung greift ein Feder- und Klemmbolzen (6) in die jeweiligen Löcher (124) im Deichselstummel. Desweiteren sind Bajonettverschlüsse in dem Deichselstummel denkbar, so daß die Arretierung keine Längskräfte aufnehmen muß. Nach Wegklappen oder Einfahren der Zugkugelkupplung kann eine gut 2 Meter lange Ladefläche in allen gängigen 2,20 bis 2,25 Meter hohen Garagen aufrecht gelagert werden, und bei einem vertikalen Aufstellen mit Vorderseite nach unten zeigend ist die Zugkugelkupplung nicht im Weg.

Für die Lagerung einer Vielzahl fertiger Anhänger nach deren Herstellung und für die Auslieferung von größere Stückzahlen eignet sich ein palettenartiges Gestell (Fig 8 und 9), z.B. als Einweggestell aus Holz (60), oder als Mehrweggestell aus Stahl. Untere Querträger haben 2 Aufnahmen (61) für Staplergabeln. Dieses ermöglicht z.B. 8 Anhänger flach übereinander (Fig 8) in einem Gestell zu befestigen, z.B. mit Schrauben (62), die in die Zurrösen des Anhängers eingreifen. Idealerweise wäre solch ein Gestell mit diagonalen Seilen (63) oder Gurten verspannt. Das Gestell erlaubt die Handhabung mit Gabelstaplern, die Einlagerung in ein Regalsystem oder die Blockstapelung mehrerer Gestelle übereinander ohne Regalsystem. Ein ähnliches patettenartiges Gestell mit stehenden Anhängern (Fig 9) hat zusätzlich den Vorteil, daß es als volles Gestell z.B. im Außenbereich eines Baumarktes plaziert werden kann und die Anhänger von diesem Gestell mit z.B. nur 2 Personen ohne Zuhilfenahme von Gabelstaplern be- und entladen werden können.

## Patentansprüche

1. Transportanhänger für einen Kraftwagen mit einer Ladefläche (46), mit einer Gummifederachse (70) und mit einer Führung (20 oder 47), mit der die Ladefläche in Bezug auf die Gummifederachse aus einer Fahrstellung nach vorne in eine Einlagerungsstellung bewegbar ist, wobei die Gummifederachse in der Fahrstellung und der Einlagerungsstellung die gleiche Orientierung bezogen auf die Ladefläche aufweist, und wobei die Ladefläche mittels einer Führung (20 oder 47) manuell und werkzeuglos bewegbar ist,
**dadurch gekennzeichnet, daß** der Transportanhänger Kotflügel (75) mit Führungen (76) aufweist, die die Kotflügel zwischen einer Fahrstellung, in der sie von den Rädern des Transportanhängers beabstandet (130) sind, und einer Einlagerungsstellung, in der sie vertikal näher an die Räder abgesenkt sind (131), werkzeuglos hin und her beweglich führen.

2. Transportanhänger nach Anspruch 1,
**dadurch gekennzeichnet, daß** die geführte Bewegung der Kotflügel (75) näher an die Räder durch eine Schwenkbewegung um eine Achse (76) erfolgt, welche parallel zur Rad-Drehachse (132) orientiert ist und vorzugsweise ca. einen halben Radaußenradius hinter der Radachse positioniert ist.

3. Transportanhänger nach Anspruch 1 oder 2,
**dadurch gekennzeichnet, daß** die geführte Bewegung der Kotflügel (75) automatisch durch die Bewegung der Ladefläche (46) mittlels eines Wirkelements (77) erfolgt.

4. Transportanhänger nach Anspruch 1,
**dadurch gekennzeichnet, daß** die Bewegung der Ladefläche gegenüber der Gummifederachse durch eine Verbindung in Form eines Schwenkelements (20) geführt ist, welches um eine erste Achse (27) parallel zur Radachse (132) schwenkt und mit welchem die Ladefläche schwenkbar um eine zweite Achse verbunden (25/30) ist, die parallel zur und mit Abstand von der ersten Achse angeordnet ist.

5. Transportanhänger nach Anspruch 1 und 4,
**dadurch gekennzeichnet, daß** das Schwenkelement (20) mindestens ein federndes Unterstützungselement (39) aufweist, welches bei der 180 Grad Schwenkbewegung das Schwenkelement sowohl aus der Richtung 0 Grad, als auch Richtung 180 Grad jeweils in die mittlere 90 Grad Position spannt (jeweils ca).

6. Transportanhänger nach Anspruch 1,
**dadurch gekennzeichnet, daß** die Bewegung von der Ladefläche gegenüber der Gummifederachse primär linear ist und mit Rollen (43/44) oder Kugelführungen unterstützt wird.

7. Transportanhänger nach Anspruch 1, 4, 5, 6,
**dadurch gekennzeichnet, daß** die Verbindung von Ladefläche zur Achse zumindest ein Arretierelement (36) aufweist, welches mittels einer mechanischen Fernbedienung (32,37,38) betätigt wird.

8. Transportanhänger nach Anspruch 1, 4, 5, 6, 7,
**dadurch gekennzeichnet, daß** dieses Arretierelement (36) die Ladefläche sowohl in der Fahrstellung (Fig 1) als auch in der Einlagerungsstellung (Fig 5) fixiert.

9. Transportanhänger nach Anspruch 1, 4, 6,
**dadurch gekennzeichnet, daß** die Verschiebung der Ladefläche in die Fahrstellung automatisch in mindestens einer formschlüssigen Verbindung (22) zwischen dem Bereich der Ladeflächenvorderkante und den Zugholmen (21) oder einer Verstrebung zwischen diesen Zugholmen endet.

10. Transportanhänger nach Anspruch 1,
**dadurch gekennzeichnet, daß** bei der Ladeflächenvariante mit Kastenaufbau zumindest die hinteren Eckrungen (52) durch eine Schwenkbewegung herunterklappbar sind.

11. Transportanhänger nach Anspruch 10,
**dadurch gekennzeichnet, daß** die linke und rechte Eckrunge (52) jeweils auf gleicher Höhe in Fahrtrichtung bezogen im unteren Bereich starr miteinander verbunden (50) sind und zusammen als eine Einheit herunterschwenkbar sind.

12. Transportanhänger nach Anspruch 1, 4, 6,
**dadurch gekennzeichnet, daß** nach der Verschiebung der Ladefläche in die Einlagerungsstellung der überwiegende Teil der dann noch unter der Ladefläche herausragenden Deichsel (21) als Deichselstummel (4) zusammen mit der Zugkugelkupplung (119) in einem Führungselement (5) positioniert ist nach lösen eines Arretierelementes (6) klappbar oder einfahrbar ist.

13. Transportanhänger nach Anspruch 1, 4, 6, 12,
**dadurch gekennzeichnet, daß** beim Wegklappen des Deichselstummels (4) dieser eine Schwenkbewegung beschreibt, welche sich prinzipiell aus zumindest 2 Bogensegmenten zusammensetzt: a) ca. 90 Grad nach unten aus dem Führungselement heraus um eine Achse parallel zur Radachse, dann b) ca. 90 Grad zu einer Seite flach unter die Ladefläche anliegend mittels einer Drehung um ca. eine in Fahrtrichtung zeigende Achse.

14. Transportanhänger nach Anspruch 1, 4, 6, 12,
**dadurch gekennzeichnet, daß** beim Einfahren des Deichselstummels dieser eine Bewegung beschreibt, welche sich prinzipiell aus zumindest 2 Segmenten zusammensetzt: a) ca. 90 Grad drehend um die Deichselstummellängsachse, dann b) Linearverschiebung in Fahrtrichtung nach hinten.

15. Transportanhänger nach einem der Ansprüche 1 - 14,
**dadurch gekennzeichnet, daß** eine Lagerung und Auslieferung mehrerer Anhänger in jeweils zusammengeklappter Einlagerungsstellung erfolgt, gebildet aus entweder einem Stapel mit übereinander liegenden Anhängern oder aus einer Reihe hintereinander stehender Anhänger, wobei bei jedem zweiten Anhänger die Ladeflächenoberseite in die gegengesetzte Richtung zeigt und sich Paare aus 2 Anhängern bilden, bei denen einer bezogen auf den anderen um 180 Grad gedreht um eine Achse parallel zur Radachse (132) positioniert ist.

## Claims

1. Traiter for a motor vehicle, which comprises a loading platform (46), a rubber compression axle (70) and a guiding feature (20 or 47), which allows to move the loading platform relative to the axle from driving position towards the front into a stowing position, whereas the rubber compression axle has in the driving position the same orientation in reference to the loading platform as in the stowing position, and whereas the loading platform can be manually moved using the guiding feature (20 or 47) without the need of tools, **characterised in that** the trailer has mudguards (75) with guiding features (76), which guide the mudguards without the need for tools back and forth from a driving position, in which the mudguards have a specific distance (130) to the wheels of the trailer, towards a stowing position, in which the mudguards are lowered vertically closer to the wheels (131).

2. Trailer according to the preceding claim,
**characterised in that** the guided movement of the mudguards (75) closer to the wheels is done as a pivoting movement around an axis (76), which is parallel to the rotating axis (132) of the wheel and which is preferably located behind the axis of the wheel by a distance of approximately half a radius of the wheel.

3. Trailer according to claim 1 or 2,
**characterised in that** the guided movement of the mudguards (75) is automatically engaged by the movement of the loading platform by means of an enabling feature.

4. Trailer according to claim 1,
**characterised in that** the movement of the loading platform relative to the rubber compression axle is guided via a connection, which is a pivoting element (20), which is pivoting around one axis (27) parallel to the axis (132) of the wheels, and which is connected to the loading platform in a pivoting movement around a second axis (25/30),
which is positioned parallel and with distance to the first axis.

5. Trailer according to claim 1 and 4,
**characterised in that** the pivoting element (20) comprises at least one spring loaded supporting element (39), which within a 180 deg pivoting range is forcing the pivoting element from the 0 deg position and from the 180 deg position towards the middle 90 deg position (always approximately).

6. Trailer according to claim 1,
charcterised in that the type of motion of the loading platform in relation to the rubber compression axle is primarily linear and is supported by rollers (43/44) or drawer-ball-bearing elements.

7. Trailer according to claim 1, 4, 5, 6,
**characterised in that** the connection of the loading platform to the rubber compression axle comprises at least one locking element (36), which is remotely mechanically actuated (32, 27, 38).

8. Trailer according to claim 1, 4, 5, 6, 7,
**characterised in that** this locking element (36) is locking the loading platform as well in the driving position (Fig 1) as in the stowing position (Fig 5).

9. Trailer according to claim 1, 4, 6,
charcterised in that the movement of the loading platform into the driving position is automatically ending in at least one interlocking connection (22) between the area of the front rim of the loading platform and the tow-bars (21) or a connecting element between two V-shaped tow-bars.

10. Trailer according to claim 1,
**characterised in that** for the type of loading platform including a box-type top at least the rear corner pillars (52) can be pivoting down.

11. Trailer according to claim 10,
**characterised in that** the right and left corner pillars (52) of the side walls being on the same level in length driving direction are directly connected to each other at the bottom (50) and can be pivoting down together as one single element.

12. Trailer according to claim 1, 4, 6,
**characterised in that** after the movement of the loading platform into the stowing position the major part of the tow-bar, which is then still reaching out (21) underneath the loading platform, is positioned like a tow-bar-stub (4) together with the trailer-coupling (119) in a guiding element (5) and can be folded away or telescoping away after opening a locking element (6).

13. Trailer according to claim 1, 4, 6, 12,
**characterised in that** the folding away of the tow-bar-stub can be described as a pivoting movement, which is built out of 2 arcs: a) a pivoting by approximately 90 deg downwards out of the guiding element around an axis parallel to the wheel-axis, and then b) a pivoting by approximately 90 deg around an axis pointing in driving direction of the trailer to then lay flat directly under the loading platform.

14. Trailer according to claim 1, 4, 6, 12,
**characterised in that** the retraction of the tow-bar-stub is described by a movement, which is built out of 2 movement-segments: a) an approximately 90 deg rotation around the longitudinal axis of the tow-bar-stub and then b) a linear motion in reverse driving direction.

15. Trailer according to claims 1 -14,
**characterised in that** the warehousing and deliveries of multiple trailers is happening in their folded stowing position in a way of either having a load stack of trailers laying flat or a load of multiple trailers standing vertically in a row behind each other, whereas on every other trailer the top side of the loading deck is facing in an opposite direction and always pairs of 2 trailers are built, in which one trailer relative to the other is positioned in a rotated orientation by means of a 180 deg rotation parallel to the wheel axis (132).

## Revendications

1. Remorque de transport pour un véhicule automobile comportant une zone de chargement (46), comportant un essieu à ressort en caoutchouc (70) et comportant un guidage (20 ou 47), avec lequel la zone de chargement est mobile par rapport à l'essieu à ressort en caoutchouc pour passer d'une position de roulage vers l'avant à une position de stockage, l'essieu à ressort en caoutchouc présentant, dans la position de roulage et dans la position de stockage, la même orientation par rapport à la zone de chargement, et la zone de chargement étant mobile manuellement et sans l'aide d'outils au moyen d'un guidage (20 ou 47),
**caractérisée en ce que** la remorque de transport présente des garde-boue (75) avec des guidages (76) qui guident les garde-boue sans outils alternativement entre une position de roulage, dans laquelle ils sont à distance (130) des roues de la remorque de transport, et une position de stockage, dans laquelle ils sont rabaissés (131) verticalement en se rapprochant des roues.

2. Remorque de transport selon la revendication 1,
**caractérisée en ce que** le mouvement guidé des garde-boue (75) s'effectue en se rapprochant des roues par un mouvement de pivotement autour d'un axe (76), qui est orienté de manière parallèle à l'axe de rotation de roue (132) et est préférentiellement positionné à environ un demi-rayon extérieur de roue derrière l'essieu.

3. Remorque de transport selon la revendication 1 ou 2,
**caractérisée en ce que** le mouvement guidé des garde-boue (75) s'effectue automatiquement par le mouvement de la surface de chargement (46) au moyen d'un élément actionneur (77).

4. Remorque de transport selon la revendication 1,
**caractérisée en ce que** le mouvement de la surface de chargement par rapport à l'essieu à ressort en caoutchouc est guidé par une liaison sous la forme d'un élément de pivotement (20), qui pivote autour d'un premier axe (27) de manière parallèle à l'essieu (132) et avec lequel la surface de chargement est reliée de manière pivotante autour d'un second axe (25/30), qui est disposé parallèle à et à distance du premier axe.

5. Remorque de transport selon les revendications 1 et 4,
**caractérisée en ce que** l'élément de pivotement (20) présente au moins un élément d'assistance élastique (39) qui, lors du mouvement de pivotement à 180 degrés, tend l'élément de pivotement autant à partir de la direction 0 degré que de la direction 180 degrés respectivement dans la position centrale à 90 degrés (respectivement approximativement).

6. Remorque de transport selon la revendication 1,
**caractérisée en ce que** le mouvement de la surface de chargement par rapport à l'essieu à ressort est principalement linéaire et est assisté par des galets (43/44) ou des guidages de garde-boue.

7. Remorque de transport selon les revendications 1, 4, 5, 6,
**caractérisée en ce que** la liaison de la zone de chargement à l'essieu présente au moins un élément d'arrêt (36), qui est actionné au moyen d'un dispositif de commande à distance mécanique (32, 37, 38).

8. Remorque de transport selon les revendications 1, 4, 5, 6, 7,
**caractérisée en ce que** cet élément d'arrêt (36) fixe la surface de chargement autant dans la position de roulage (Fig 1) que dans la position de stockage (Fig 5).

9. Remorque de transport selon les revendications 1, 4, 6,
**caractérisée en ce que** le déplacement de la surface de chargement dans la position de roulage se termine automatiquement par au moins une liaison par complémentarité de forme (22) entre la zone du chant avant de la surface de chargement et les longerons (21) ou par un entrecroisement entre ces longerons.

10. Remorque de transport selon la revendication 1,
**caractérisée en ce que**, dans le cas de la version de surface de chargement avec caisse, au moins les ranchers arrière (52) sont repliables vers le bas par un mouvement de pivotement.

11. Remorque de transport selon la revendication 10,
**caractérisée en ce que** les ranchers droit et gauche (52), respectivement à la même hauteur par rapport à la direction de roulage, sont reliés solidairement entre eux dans la zone inférieure (50) et peuvent être abaissés conjointement par un mouvement di pivotement en formant une unité.

12. Remorque de transport selon les revendications 1, 4, 6,
**caractérisée en ce que**, après le déplacement de la surface de chargement dans la position de stockage, la majeure partie du timon (21) alors encore en saillie sous la surface de chargement est positionnée comme un tronçon de timon (4) conjointement avec l'accouplement de boule d'attelage (119) dans un élément de guidage (5) et est rabattable ou repliable après le déclenchement d'un élément d'arrêt (6).

13. Remorque de transport selon les revendications 1, 4, 6, 12,
**caractérisée en ce que**, lors du repliement du tronçon de timon (4), ce dernier décrit un mouvement qui se compose principalement d'au moins 2 segments en arc : a) environ 90 degrés vers le bas hors de l'élément de guidage autour d'un axe de manière parallèle à l'essieu, puis b) environ 90 degrés vers un côté reposant à plat sous la surface de chargement au moyen d'une rotation autour inviron d'un axe orienté dans la direction de roulage.

14. Remorque de transport selon les revendications 1, 4, 6, 12,
**caractérisée en ce que**, lors de l'escamotage du tronçon de timon, ce dernier décrit un mouvement qui se compose principalement d'au moins 2 segments : a) entraînement en rotation d'environ 90 degrés autour de l'axe longitudinal du tronçon de timon, puis b) déplacement linéaire dans la direction de roulage vers l'arrière.

15. Remorque de transport selon l'une des revendications 1 à 14,
**caractérisée en ce qu'**un entreposage et une livraison de plusieurs remorques s'effectuent dans une position de stockage respectivement pliée, formée soit d'une pile de remorques superposées les unes sur les autres, soit d'une série de remorques debout les unes derrière les autres, la face supérieure de chargement étant orientée dans la direction opposée pour une remorque sur deux et des paires étant formées par 2 remorques, l'une étant positionnée tournée à 180 degrés par rapport à l'autre autour d'un axe de manière parallèle à l'essieu (132).
